(19) Europäisches Patentamt
European Patent Office
Office européen des brevets

(11) **EP 1 398 301 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**16.12.2015 Patentblatt 2015/51**

(45) Hinweis auf die Patenterteilung:
**12.09.2007 Patentblatt 2007/37**

(21) Anmeldenummer: **03015916.4**

(22) Anmeldetag: **12.07.2003**

(51) Int Cl.:
*C01B 33/193* (2006.01)    *C09C 1/30* (2006.01)
*C09D 7/12* (2006.01)

(54) **Effiziente Mattierungsmittel basierend auf Fällungskieselsäuren**

Matting agent based on precipitated silica

Agent de matage à base de silice de précipitation

(84) Benannte Vertragsstaaten:
**BE DE FR GB IT TR**

(30) Priorität: **06.09.2002 DE 10241273**

(43) Veröffentlichungstag der Anmeldung:
**17.03.2004 Patentblatt 2004/12**

(73) Patentinhaber: **Evonik Degussa GmbH**
**45128 Essen (DE)**

(72) Erfinder:
• **Schubert, Jürgen, Dr.**
**53343 Wachtberg (DE)**
• **Kuhlmann, Robert**
**50374 Erftstadt (DE)**
• **Christian, Hans-Dieter**
**63755 Alzenau (DE)**

(56) Entgegenhaltungen:
EP-A- 0 922 671      EP-A- 1 348 669
EP-A2- 0 078 909     EP-A2- 0 341 383
DE-A- 10 058 616     US-A- 5 034 207

Bemerkungen:
Die Akte enthält technische Angaben, die nach dem Eingang der Anmeldung eingereicht wurden und die nicht in dieser Patentschrift enthalten sind.

EP 1 398 301 B2

**Beschreibung**

Die vorliegende Erfindung betrifft effiziente Mattierungsmittel auf Basis von Fällungskieselsäuren, deren Herstellung und deren Verwendung in Farben und Lacken.

Fällungskieselsäuren werden schon seit langem als Mattierungsmittel in Lacken eingesetzt. Die Mattierungseigenschaften dieser Verbindungen beruhen auf einer dispersen Lichtreflektion an der durch Kieselsäurepartikel aufgerauten Lackoberfläche. Die Effizienz von Mattierungsmitteln wird daher durch den Reflektionswert bei verschiedenen Beobachtungswinkeln (in der Regel 60° und 85°) sowie die für eine ausreichende Mattierung nötige Einwaage bestimmt. Die so behandelten Oberflächen sollen zwar einen matten, seidigen Glanz aufweisen, ohne jedoch rau zu wirken. Die Rauigkeit einer Oberfläche kann z. B. über den mittleren Rauwert Ra, die Rautiefe Rz bestimmt werden. Die Anforderungen an Mattierungsmittel, die nötigen Messmethoden sowie allgemeine Informationen finden sich z. B. in der Schriftenreihe Pigmente, Nr. 21 (2002) der Degussa AG.

Die Mattierung einer Lackoberfläche ist selbstverständlich auch von der Menge des eingesetzten Mattierungsmittels abhängig. Da Fällungskieselsäuren neben einer mattierenden Wirkung auch eine Viskositätserhöhung des Lacks verursachen, ist eine Erhöhung des Kieselsäurenanteils in einem Lack nur in gewissen Grenzen möglich.

Es bestand daher die Aufgabe, Kieselsäuren zu finden, die bei einem gleichen Massenanteil wie die bekannten Kieselsäuren eine verbesserte Mattierungswirkung besitzen.

Überraschender Weise wurde gefunden, dass Kieselsäuren die eine hohe DBP-Aufnahme besitzen, sehr effiziente Mattierungsmittel darstellen.

Gegenstand der vorliegenden Erfindung sind daher Fällungskieselsäuren, gekennzeichnet durch

| | |
|---|---|
| BET | 350 - 550 m$^2$/g |
| DBP-Zahl | 350-400 g/100 g |
| $d_{50}$ | 5-15$\mu$m |
| Stampfdichte | 20-70 g/l und |

Teilchengrößenverteilung $(d_{90}-d_{10}):d_{50}$ zwischen 0.90 und 1,5.

Neben den unbehandelten, hydrophilen Kieselsäuren ist auch die Verwendung von mit Wachs belegten Kieselsäuren als Mattierungsmittel bekannt. Mit einer solchen Wachsbehandlung wird das Sedimentationsverhalten der Fällungskieselsäuren deutlich verbessert.

Ein weiterer Gegenstand der vorliegenden Erfindung sind daher wachsbeschichtete Fällungskieselsäuren, gekennzeichnet durch

| | |
|---|---|
| BET | 350 - 550 m$^2$/g |
| DBP-Zahl | 350 -400 g/100 g |
| $d_{50}$ | 5-15$\mu$m |
| Stampfdichte | 20-70 g/l |
| Kohlenstoffgehalt | 2-18 Gew.-%. |

Die erfindungsgemäßen Fällungskieselsäuren weisen bevorzugt DBP-Zahlen von 350 bis 380 g/100 g, einen $d_{50}$-Wert von 7 bis 11 bzw. 8 bis 12, bevorzugt 8 bis 9,5 und eine Stampfdichte von bevorzugt 60 bis 70 g/l auf.

Die Stampfdichte wird gemäß ISO 787-11 direkt nach der Vermahlung der Kieselsäure bestimmt. Die DBP-Aufnahme wird gemäß DIN 53601, ebenfalls direkt nach der Vermahlung bestimmt. Analoges gilt für die Messung der BET-Oberfläche gemäß ISO 5794-1 Anhang D.

Die $d_{10}$-, $d_{50}$- und $d_{90}$-Werte werden durch Laserbeugung an einem Coulter LS-230 bestimmt.

Für eine gleichmäßige Mattierungswirkung ist eine möglichst enge Teilchengrößenverteilung anzustreben. Die Teilchengrößenverteilung kann z. B. durch Messungen der $d_{10}$, $d_{50}$ und $d_{90}$-Werte in einfacher Weise bestimmt werden. Erfindungsgemäß unbehandelte oder wachsbeschichtete Fällungskieselsäuren weisen daher eine Teilchengrößenverteilung (Span), definiert über den Quotienten $(d_{90} - d_{10}) : d_{50}$ zwischen 0,90 bis 1,5, bevorzugt 1,0 bis 1,2 auf.

Eine quantitative Erfassung des Mattierungsgrades von Lackfilmoberflächen wird häufig durch Messung der Reflektionswerte bei bestimmten Glanzwinkeln bestimmt. In der Praxis haben sich Messungen bei einem Glanzwinkel von 60° und 85° bewährt, die in Anlehnung an DIN 67530, ISO 2813 oder TM 523-78 gemäß der im folgenden aufgeführten Vorschrift zur Bestimmung des Glanzwertes an einem Standard-Einbrenndecklack durchgeführt werden.

Unbehandelte oder wachsbeschichtete erfindungsgemäße Fällungskieselsäuren weisen bevorzugt Glanzwerte bei einem Winkel von 60° von 15 bis 25 und bei einem Winkel von 85° von 30 bis 70 auf. Die Differenz zwischen 85° Reflektometerwert und 60° Reflektometerwert wird auch als Sheen bezeichnet und erlaubt eine Aussage über die Mattierungswirkung einer Oberfläche bei verschiedenen Beobachtungswinkeln. Ein niedrigerer Sheen bedeutet, das unter allen Betrachtungswinkeln einer Oberfläche diese matt erscheint.

Die erfindungsgemäße Kieselsäure weist im Vergleich zu kommerziellen Mattierungsmitteln einen besonders niedrigen Glanzwert in allen Beobachtungswinkeln auf. Dies bedeutet, das zum Erreichen einer bestimmten Mattierungswirkung weniger Material als bei konventionellen Mattierungsmitteln benötigt wird oder bei gleicher Menge eine verbesserte Wirkung erzielt wird.

Zur Herstellung von unbehandelten, erfindungsgemäßen Fällungskieselsäuren kann z. B. DE 100 58 616 zurückgegriffen werden. Hier sind Fällungskieselsäuren offenbart, die im trockenen, unvermahlenen Zustand eine DBP-Adsorption von 380 bis 420. g/100 g aufweisen. Die Herstellung dieser Kieselsäuren erfolgt, dass man unter Rühren und Scheren in eine auf 35 bis 45°C erwärmte Vorlage aus Wasser

  a) innerhalb von mindestens 100 Minuten gleichzeitig Wasser und Schwefelsäure unter Aufrechterhaltung von pH 6-7 gibt, wobei die Zugabe für 60-120 Minuten unterbrochen wird und sich nach beendeter Zugabe eine Feststaftkonzentration von 36 - 42 g/l einstellt
  b) den Feststoff abfiltriert und den Filterkuchen auswäscht und
  c) den Feststoff einer Kurzzeit-Trocknung unterwirft.

Bevorzugt wird eine solche Fällungskieselsäure einer Kurzzeittrocknung unterworfen, in dem der Filterkuchen auf einen Feststoffgehalt von weniger als 18 Gew.-% verflüssigt und diese Suspension anschließend sprühgetrocknet wird. Es ist auch möglich, den Filterkuchen mittels eines Spin-Flash-Trockners ggf. mit anschließender Einstellung des pH auf 7 bis 8 durch Ammoniakgas zu trocknen.

Die so erhaltene Fällungskieselsäure kann entweder direkt vermahlen oder zunächst einer Belegung mit Wachs unterworfen werden.

Die Wachsbeschichtung der erfindungsgemäßen Kieselsäure kann z. B. gemäß EP 1 182 233 durchgeführt werden. Hier werden Fällungskieselsäuren mit z. B. Polyethylenwachsen, Fischer-Tropsch-Wachsen oder Wachsen auf Silikonbasis durch eine Wärmebehandlung der Kieselsäuren mit dem Wachs bei einer Temperatur unterhalb des Schmelzbereichs und unterhalb der Zersetzungstemperatur des Wachses an Luft durchgeführt. Es ist möglich, die Belegung der Kieselsäure mit dem Wachs gleichzeitig mit der Vermahlung durchzuführen; in jedem Fall hat sich die Belegung mit 2 bis 15, bevorzugt 5 bis 10 Gew.-% Wachs bewährt. Die erfindungsgemäßen Fällungskieselsäuren sollten einen Kohlenstoffgehalt von 2 bis 18 Gew.%, bevorzugt 3 bis 10 Gew.-% und besonders bevorzugt einen Kohlenstoffgehalt von 3 bis 6 Gew.-% aufweisen.

Zur Vermahlung der erfindungsgemäßen Fällungskieselsäuren können handelsübliche Mühlen wie z. B. eine Prallsichtermühle (von 50 ZPS, Firma: Hosokawa-Alpine) verwendet werden.

Neben der genannten Wachsimprägnierung von Kieselsäure sind noch andere Verfahren zu diesem Zweck bekannt und können z. B. in DE 1 006 100, DE 15 92 865 oder EP 0 922 691 nachgelesen werden. Hier werden Wachssuspensionen, ggf. unter Vermittlung eines Dispergators mit einer Kieselsäurensuspension umgesetzt. Die so erhaltene mit Wachs imprägnierte oder belegte Kieselsäure muss anschließend getrocknet und ggf. neu gesichtet werden.

Die erfindungsgemäßen unbehandelten oder mit Wachs imprägnierten Fällungskieselsäuren können als Mattierungsmittel in Farben oder Lacken verwendet werden.

Die folgenden Beispiele sollen die Erfindung näher erläutern jedoch nicht den Schutzumfang, wie in den Patentansprüchen dargelegt, beschränken:

**Beispiele**

Es wurde eine Fällungskieselsäure gemäß DE 10 058 616, Beispiel 1 bis 6 mit den physikalischchem ischen Daten

| pH | 7,6 |
| DBP | 389 g/100 g, |
| Stampfdichte | 154 g/l und |
| BET-Oberfläche | 454 m$^2$/g |

hergestellt und auf einer 50 ZPS Mühle zu verschiedenen Korngrößen vermahlen. Als Referenz dient Acematt HK 450.

Die Differenzwerte des Glanz 60° und 85° zu Acematt HK 450 zeigen eine deutlich verbesserte Mattierungswirkung bei gleicher eingesetzter Menge.

| Beispiel | 1 | Verglelchsbelspiel 2 | 3 | 4 | 5 | Acematt HK 450 |
|---|---|---|---|---|---|---|
| nach Trocknung | | | | | | |
| BET [g/m$^2$] | 501 | 458 | 484 | 476 | 472 | 450 |
| DBP [g/100 g] | 383 | 366 | 387 | 412 | 400 | 341 |
| nach Vermahlung | | | | | | |
| d50[$\mu$m] | 9.5 | 9.3 | 10.1 | 10.1 | 10.6 | 10.2 |
| Span | 0.97 | 0.95 | 0.99 | 1.07 | 1.21 | 1.10 |
| DBP [g/100 g] | 361 | 333 | 359 | 358 | 352 | 314 |
| Stampfdichte [g/l] | 56 | 60 | 57 | 58 | 59 | 90 |
| Lackprüfung | | | | | | |
| Einwaage [g] | 4.5 | 4.6 | 4.5 | 4.5 | 4.5 | 4.5 |
| Grindemeterwert [$\mu$m] | 30 | 29 | 30 | 30 | 30 | 35 |
| Glanz 60° | 18.8 | 20.0 | 17.0 | 18.1 | 18.2 | 21.3 |
| Glanz 85° | 56.6 | 59.3 | 51.7 | 54.3 | 55.1 | 55.1 |
| Sheen | 37.8 | 39.3 | 34.7 | 36.2 | 36.9 | 33.8 |
| Diff. Glanz 60° zu HK 450 Std. | -2.5 | -1.3 | -4.3 | -3.2 | -3.1 | |
| Diff. Glanz 85° zu HK450 Std. | 1.5 | 4.2 | -3.4 | -0.8 | 0.0 | |
| Einwaage [g] | 5.5 | 5.5 | 6.6 | 6.6 | 5.5 | 5.5 |
| Grindemeterwert [$\mu$m] | 32 | 31 | 32 | 32 | 32 | 34 |
| Glanz 60° | 11.7 | 14.8 | 12.0 | 10.7 | 11.9 | 15.6 |
| Glanz 85° | 25.4 | 37.3 | 26.6 | 22.9 | 26.3 | 43.6 |
| Sheen | 13.7 | 22.5 | 14.6 | 12.2 | 14.4 | 28.0 |
| Diff. Glanz 60° zu HK 450 | -3.9 | -0.8 | -3.6 | -4.9 | -3.7 | |
| Diff. Glanz 85° zu HK. | -18.2 | -6.3 | -17.0 | -20.7 | -17.3 | |

Die beschriebenen lacktechnischen Untersuchungen wurden im Standardprüflack "Schwarzlack" Duplex D1326, Fa. Herberts, Österreich, wie folgt durchgeführt.

**Allgemeine Vorschrift zur Bestimmung der Glanzwerte**

**Herstellung des Mattlackes**

100 g, Lack DUPLEX D 1326 (Rezepturnummer L 87992, Fa. DuPont, Herberts Austria GmbH) werden in einen 350 ml Polyethylenbecher eingewogen und 20 g Verdünnung V 0003 (Fa. DuPont, Herberts Austria GmbH) zugewogen. Anschließend wird geforderte Menge Mattierungsmittel auf 10 mg genau eingewogen und sorgfältig mit einem Spatel in den verdünnten Prüflack eingearbeitet. Im Anschluss daran wird mit einem Flügelrührer $\varnothing$ 43 mm 10 min bei 2000 U/min dispergiert, wobei der PE-Becher zur Vermeidung von Verdunstungsverlusten abgedeckt ist. Nach Einarbeitung des Mattierungsmittels wird der mattierte Lack im verschlossenen Becher zum Entlüften 30 min stehen gelassen. Es ist dabei zu beachten, dass der Standard (HK 450) zeitnah mit den zu untersuchenden Proben dispergiert wird (Maximale Zeitdifferenz 3 Stunden).

**Prüfung und Verarbeitung des Mattlackes**

Nach der erfolgten Entlüftung wird der Lack mit einem motorischen Aufziehgerät (Erichsen Coatmaster 509 MC) bei einer Geschwindigkeit von 25 mm/s mit einem Vierkantrakel mit Spalthöhe 120 $\mu$m auf gereinigte Glasscheiben 130 x 90 x 3 mm appliziert. Von jeder dispergierten Probe sind 2 Glasscheiben zu beschichten. Bei jedem Einbrennvorgang sind diese Musterschreiben gegen 2 Scheiben des Standards zu prüfen. Die maximale Belegung einer Horde beträgt 10 Musterscheiben + 2 Standards

**Patentansprüche**

1. Fällungskieselsäure, **gekennzeichnet durch**

| | |
|---|---|
| BET | 350-550 $m^2$/g |
| DBP-Zahl | 350 - 400 g/100 g |
| $d_{50}$ | 5-15 $\mu$m |
| Stampfdichte | 20 - 70 g/l |
| Teilchengrößenverteilung | $\dfrac{d_{90}\text{-}d_{10}}{d_{50}}$ zwischen 0.90 und 1.5. |

2. Fällungskieselsäure gemäß Anspruch 1, **dadurch gekennzeichnet, dass** der

$$d_{50} \qquad 7\text{-}11\ \mu m$$

beträgt.

3. Fällungskieselsäure nach einem der Ansprüche 1 bis 2, **dadurch gekennzeichnet, dass** die Glanzwinkel

| | |
|---|---|
| 60° | 15-25 und |
| 85° | 50-70 |

betragen.

4. Verwendung der Fällungskieselsäure nach Anspruch 1 bis 3 als Mattierungsmittel in Lacken.

5. Wachsbeschichtete Fällungskieselsäure, **gekennzeichnet durch**

| | |
|---|---|
| BET | 350 - 550 $m^2$/g |
| DBP-Zahl | 350 - 400 g/100 g |
| $d_{50}$ | 5 - 15 $\mu$m |
| Stampfdichte | 20 - 70 g/l und |
| Kohlenstoffgehalt | 2-18 Gew.-%. |

6. Wachsbeschichtete Fällungskieselsäure gemäß Anspruch 5, **dadurch gekennzeichnet, dass** die Teilchengrößenverteilung

$$\frac{d_{50} \ - \ d_{10}}{d_{50}}$$

zwischen 0,90 und 1,5 liegt.

**7.** Wachsbeschichtete Fällungskieselsäure gemäß Anspruch 5 oder 6,
**dadurch gekennzeichnet,**
**dass** die Glanzwinkel

| | |
|---|---|
| 60° | 15-25 und |
| 85° | 50 - 70 |

betragen.

**8.** Verwendung der nachbeschichteten Fällungskieselsäure gemäß der Ansprüche 5 bis 7 als Mattierungsmittel in Lacken.

**Claims**

**1.** Precipitated silica, **characterised by**

| | |
|---|---|
| BET | 350 - 550 $m^2$/g |
| DBP number | 350 - 400 g/100g |
| $d_{50}$ | 5 - 15 $\mu$m |
| tamped density | 20 - 70 g/l |

particle size distribution $\dfrac{d_{90}-d_{10}}{d_{50}}$ between 0.90 and 1.5.

**2.** Precipitated silica according to claim 1, **characterised in that** the $d_{50}$ is from 7 - 11 $\mu$m.

**3.** Precipitated silica according to either of claims 1 to claim 2, **characterised in that** the gloss angle values are:

| | |
|---|---|
| 60° | 15 - 25 and |
| 85° | 50 - 70. |

**4.** Use of the precipitated silica according to any of claims 1 to 3 as a matting agent in paints.

**5.** Wax-coated precipitated silica **characterised by**

| | |
|---|---|
| BET | 350 - 550 $m^2$/g |
| DBP number | 350 - 400 g/100g |
| $d_{50}$ | 5 - 15 $\mu$m |
| tamped density | 20 - 70 g/l and |
| carbon content | 2 - 18 % by weight. |

**6.** Wax-coated precipitated silica according to claim 5, **characterised in that** the particle size distribution

$$\frac{d_{90} - d_{10}}{d_{50}}$$

is between 0.90 and 1.5.

**7.** Wax-coated precipitated silica according to claim 5 or 6, **characterised in that** the gloss angle values are:

|       |             |
|-------|-------------|
| 60°   | 15 - 25 and |
| 85°   | 50 - 70.    |

8. Use of the aftercoated precipitated silica according to any of claims 5 to 7 as a matting agent in paints.

**Revendications**

1. Acide silicique de précipitation,
**caractérisé par**

| | |
|---|---|
| une surface BET de | 350 à 550 $m^2$/g |
| un indice DBP de | 350 à 400 g/100 g |
| un $d_{50}$ de | 5 à 15 $\mu$m |
| une densité après tassement de | 20 à 70 g/l |
| une répartition granulométrique | |

$$\frac{d_{90} - d_{10}}{d_{50}}$$

comprise entre 0,90 et 1,5.

2. Acide silicique de précipitation selon la revendication 1,
**caractérisé en ce que**

le $d_{50}$ est de 7 à 11 $\mu$m.

3. Acide silicique de précipitation selon l'une quelconque des revendications 1 à 2,
**caractérisé en ce que**

| | |
|---|---|
| les angles de Bragg | |
| de 60° sont égaux à | 15 à 25 |
| et de 85° à | 50 à 70. |

4. Utilisation de l'acide silicique de précipitation selon la revendication 1 à 3, en tant qu'agent de matage dans les peintures.

5. Acide silicique de précipitation, recouvert de cire,
**caractérisé par**

| | |
|---|---|
| une surface BET de | 350 à 550 $m^2$/g |
| un indice DBP de | 350 à 400 g/100 g |
| un $d_{50}$ de | 5 à 15 $\mu$m |
| une densité après tassement de | 20 à 70 g/l |
| une teneur en carbone de | 2 à 18 % en poids. |

**6.** Acide silicique de précipitation recouvert de cire, selon la revendication 5, **caractérisé en ce que** la répartition granulométrique

$$\frac{d_{90} - d_{10}}{d_{50}}$$

est comprise entre 0,90 et 1,5.

**7.** Acide silicique de précipitation recouvert de cire, selon la revendication 5 ou 6, **caractérisé en ce que**

les angles de Bragg
de 60° sont égaux à    15 à 25
et de 85° à                    50 à 70.

**8.** Utilisation de l'acide silicique de précipitation post-revêtu selon les revendications 5 à 7, en tant qu'agent de matage dans les peintures.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10058616
- EP 1182233 A
- DE 1006100
- DE 1592865
- EP 0922691 A